# EUROPEAN PATENT SPECIFICATION

(11) **EP 2 811 837 B1**
(45) Date of publication and mention of the grant of the patent: **06.04.2016**
(21) Application number: 13700570.8
(22) Date of filing: 17.01.2013
(51) Int. Cl.: A22C 17/00, A23B 4/28

(54) **INJECTION APPARATUS AND PROCESS TO OPERATE AN INJECTION APPARATUS**
INJEKTIONSVORRICHTUNG UND VERFAHREN ZUM BETRIEB EINER INJEKTIONSVORRICHTUNG
APPAREIL D'INJECTION ET PROCÉDÉ D'UTILISATION D'UN APPAREIL D'INJECTION

(30) Priority: 08.02.2012 EP 12000819
(43) Date of publication of application: 17.12.2014
(73) Proprietor: GEA Food Solutions Bakel B.V., 5761 EN Bakel (NL)
(72) Inventor: BOOGERS, George Lambertus Josephus Maria, NL-5406 AR Uden (NL); VOESTEN, Martien, 6595 BH Ottersum (NL)
(74) Representative: Wolff, Felix
(86) International application number: PCT/EP2013/050833
(87) International publication number: WO 2013/117399

(56) References cited:
- EP-A1- 0 845 215
- EP-A2- 0 537 855
- WO-A1-03/035120
- US-A- 2 756 666
- US-A- 3 675 567
- US-A- 4 787 893
- US-A- 5 738 004

## Description

The present invention relates to an injection apparatus, to inject a liquid into a food article, particularly meat, comprising liquid injection means, which reciprocates between a remote- and an end position, driven by a drive. The present invention further relates to a process to operate an injection apparatus which comprises an injection means, which is reciprocated between a remote position and an end position which is decelerated prior to reaching the remote and/or the end position.

Such apparatus and process are well known from the state in the art, for example from EP 0 845 215 A1 and are utilized to inject a liquid, particularly a brine into a food article, particularly meat, to marinate the food article. The brine usually comprises water, salt and/or spices. The liquid may comprise food particles. The liquid can be an emulsion. The apparatus comprises a table, a belt and/or the like, which supports the food article during injection. Furthermore, the apparatus comprises liquid injection means, particularly a device with an array of needles. The device is reciprocated between a remote- and an end position, by a vertical movement. However, the apparatus and processes according to the state of the art are difficult to control and/or are energy consuming.

It was therefore the objective of the present invention to provide an apparatus and a process which does not comprise the deficiencies according to the state of the art.

This problem is solved with an injection apparatus, to inject a liquid into a food article, particularly meat, comprising a liquid injection means, which reciprocates between a remote- and an end position, driven by a drive, wherein the drive comprises a motor and a toothed belt, a toothed rack and/or a chain, characterized in that it comprises an energy recuperation device.

The disclosure made regarding this embodiment of the present invention also applies to the other embodiments of the present invention and vice versa.

The present invention relates to an apparatus to inject a liquid, particularly a brine into a food article, particularly meat, to marinate the food article. The brine usually comprises a liquid, like water, salt and/or spices. The liquid may comprise food particles. The liquid can be an emulsion. The apparatus usually comprises a table, a belt and/or the like, which supports the food article during the injection of the liquid and/or which transports the food article towards the liquid injection means and away. Furthermore, the apparatus comprises liquid injection means, particularly a device with an array of needles. The device reciprocates between a remote position, in which the liquid injection means are not in contact with the food article, and an end position, which is the turning point of the liquid injection device from its downward towards its upward movement. The movement of the liquid injection means is preferably a vertical movement. The remote- and/or the end position are preferably adjustable, for example, based on the food article to be marinated, for example its height and/or its structure. While the liquid injection means are in contact with the food article, the liquid is ejected from the liquid injection means and injected into the food article. The injection may take place during the movement of the liquid injection means towards the end position and/or during the movement from the end position away towards the remote position. As soon as the injection means is no more in contact with the food article, the ejection of liquid from the liquid injection means is preferably stopped.

The inventive apparatus preferably comprises means to determine the height of the food article to be marinated. Based on this information, the remote position is chosen such that the food article fits under the liquid ejection means. This saves time and energy.

The inventive apparatus preferably comprises compression means, for example a pump, which forces the liquid towards the liquid injection means and into the food article. The amount of liquid ejected by the liquid ejection means may vary with the motion of the liquid injection means in the food article. The amount of liquid ejected while the liquid ejection means move towards the end position may be different from the amount of liquid ejected during the reverse movement of the liquid injection means. The amount of liquid ejected may be a function of the movement of the liquid injection means within the food article. The amount of liquid discharged from the liquid injection means can be controlled by controlling the pump and/or one or more valves downstream of the pump, for example in combination with a bypass, preferably a bypass circuit to a tank and/or mechanically by moving the needles relative to the liqid injection means.

As already mentioned above, the liquid injection means moves from its remote position, in which it is not in contact with the food article, to an end position. In this end position, in which the injection means is normally still within the food article, the injection means reverses its motion and moves towards the remote position again, in which the motion cycle starts again. The movement of the liquid injection means is typically an upward and downward movement, whereas the remote position is above the end position and above the food article and the end position is still within the food article. Alternatively, the liquid injection means are moved all the way through and past the food product, to inject a liquid into the bottom of the food product. Typically, the inventive apparatus comprises a table, a belt or the like by which the food article is transported towards the liquid injection means, supported during the injection of the liquid into the food article and/or transported away from the liquid injection means. This table, belt or the like is preferably still below the end point of the motion of the liquid injection means.

Preferably, the table, the belt or the like comprises a motor, preferably an AC-motor with rotational position detection means, for example an encoder. Thus, the exact position and/or motion of each food article on the table, the belt or the like can be determined.

According to the present invention, the liquid injection means comprises a drive, which moves the liquid injection means between the two positions and/or towards a home position. This drive comprises a motor with a rotating sprocket and a toothed belt, a toothed rack and/or chain, preferably an endless toothed belt and/or an endless chain. Due to this configuration, it is very simple to drive the liquid injection means, after an acceleration phase and until a deceleration phase with a constant velocity, particularly, when the liquid injection means is in contact with the food article. This results in an even distribution of the injected liquid in the food article. The velocity of the liquid injection means between the movement towards the end position and away from the end position can be different or equal. Preferably, the inventive apparatus comprises more than one, preferably two racks, more than one, preferably two belts, preferably endless belts, and/or more than one, preferably two chains, preferably endless chains.

Preferably, the toothed belt, the toothed rack and/or chain moves relative to a frame. The motor is preferably fixed to the frame and drives the toothed belt/rack and/or the chain. In case more than one toothed rack/belt and/or chain is provided, the motor preferably drives two or more sprockets, all fixed to the same axis driven by the motor. Thus the movement of all racks/belts and/or chains is synchronized. The injection means are preferably connected to the toothed belt, the toothed rack and/or the chain.

In a preferred embodiment, the motor is a servomotor, an AC motor, a DC motor, or a stepper motor. Preferably, the motor comprises or is connected to rotational position detection means, for example an encoder. The information of the rotational position detection means, for example an encoder, is preferably supplied to a frequency converter to control the rotational speed of the motor. Preferably, the output of the motor rotates with uniform rpm. Thus, due to the toothed belt, the toothed rack and/or the chain, the liquid injection means also moves with a constant speed, preferably in a vertical direction. Near the remote- and the end position, the output of the motor and thus the liquid injection means is decelerated and stopped. Then, the output of the motor reverses its rotation-direction and is accelerated until the output reaches the desired rpm until it is decelerated again. An, at least essentially, constant velocity of the liquid injection means, while the liquid injection means are in contact with the food article, has the advantage that the liquid injected into the food article is distributed more evenly.

Alternatively the motor is a servomotor with a servo drive. Additionally, the inventive apparatus preferably comprises position detection means, for example a sensor in combination with a ruler. The information from the servomotor and/or the detection means are preferably utilized to determine the position and the speed of the liquid injection means.

During the movement of the liquid injection means from the remote to the end position and vice versa, the velocity of the liquid injection means is preferably changed. It is for example desirable to operate the liquid injection means with an increased speed, when the liquid injection means is not in contact with the food article and/or when no liquid is ejected from the liquid injection means and then slow the liquid injection means down, when it is in contact with the food article and/or when liquid is ejected from the liquid injection means.

The end- and the remote position of the liquid injection means is preferably adapted to the food article to be treated with the liquid, so that both the total stroke length, i.e. the distance between the remote- and the end-position, and the distance that the liquid injection means move through the food article can be adjusted.

In a preferred embodiment, the inventive injection apparatus comprises means to determine the position and/or the velocity of the liquid injection means. Preferably, this means is a ruler and/or a sensor. The information of the position and/or the velocity of the liquid injection means is preferably utilized to control the motion of the liquid injection means. Furthermore, the information is preferably used to control a transportation means, for example a belt, which moves the food article to the liquid injection means and away. Preferably, the information of the position of the liquid injection means is used to control the amount of liquid ejected from the liquid injection means. This can be executed by controlling the position of a valve and/or by controlling the pump which supplies the liquid and/or by displacing the needles relative to a manifold.

Due to the position and motion control of the liquid injection means, it is for example possible to chose the remote- and/or the end position of the liquid injection means in a broad range, adapted individually to each food article to be treated. Thus, for example, more output of treated food articles can be achieved by choosing the remote position of the liquid injection means as the position in which the liquid injection means are just no more in contact with the food article. This reduces the length of the return stroke and the overall time needed to treat a food article. The height of each food article can be measured upfront and the remote position can be adjusted for each food article individually. This height information can also be utilized to adjust the position of a stripper plate, as described in DE 3 034 284 A1, which is herewith enclosed by reference and thus part of the disclosure of the present patent application.

The injection apparatus comprises an energy recuperation device. This energy recuperation device preferably recovers energy preferably from the reciprocating movement of the liquid injection means, particularly during its deceleration. The kinetic energy of the liquid injection means during deceleration is preferably converted into electrical energy, which is more preferably utilized to run the pump which supplies the injection liquid. Preferably, the DC-buses of the frequency converters, for example of the motors that drive the liquid injection means and the pump, will be linked to each other. Preferably, the energy recuperation device comprises a regenerative brake which absorbs the kinetic energy, which will not be used by the pump motor.

Another subject matter of the present invention is a process to operate an injection apparatus which comprises a liquid injection means, which is reciprocated between a remote position and an end position and which is decelerated prior to reaching the remote and/or the end position, wherin the kinetic energy during the deceleration is at least partially recuperated, preferably converted into electrical energy.

The disclosure made regarding this subject matter also applies to the other subject matters and vice versa.

According to a preferred embodiment of the present invention, a liquid pump is provided and that the recuperated energy is utilized to operate the liquid pump.

According to another preferred or inventive embodiment of the present invention, a liquid injection means and means to control the liquid injection means are provided, which controls the amount of liquid ejected out of the means, while the liquid injection means are in contact with the food article.

The disclosure made regarding this subject matter also applies to the other subject matters and vice versa.

Preferably, the ejection of liquid is reduced, preferably stopped, before the liquid injection means reach their end position. More preferably, the ejection of the liquid is reduced, even more preferably stopped, while the liquid ejection means is in its end position. Much more preferably, the ejection of the liquid is only activated after the liquid injection means has already left its end position.

Liquid that is spilled and/or drains out of the food article is preferably collected and more preferably recycled to the liquid injection means.

The inventions are now explained according to figures 1 - 4e. These explanations do not limit the scope of protection and apply to all inventions of the present patent application likewise.
- **Figure 1**: shows the drive of the liquid injection means.
- **Figure 2**: shows a first embodiment of the control scheme of the inventive apparatus.
- **Figure 3**: shows a second embodiment of the control scheme of the inventive apparatus.
- **Figures 4a - 4e**: show different control patterns of the liquid ejection.

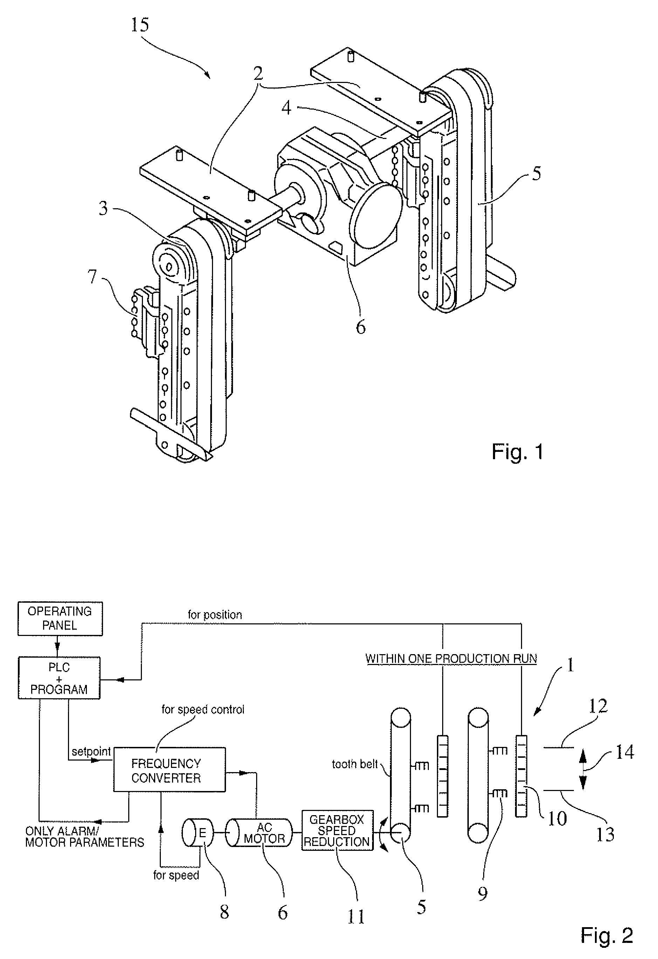

Figure 1 shows the drive 15 of the inventive apparatus. This drive comprises a motor with an axis 4, which is mounted at the frame 2 of the inventive apparatus. The motor 6 is also fixed to the frame of the inventive apparatus. At both ends, sprockets 3 are connected to the axis 4 torque-proof. Each sprocket 3 drives a toothed, endless belt 5. At each belt 5 a connection 7 is fixed which is directly or indirectly connected to the liquid injection means, for example a needle head. The combination of a rotating motor and a toothed belt has the advantage, that a constant rotation of the axis 4 results in a constant speed of the liquid injection means 9. Thus, a constant motion of the liquid injection means 9 is easily achieved. Furthermore little noise is emitted from a toothed belt.

The person skilled in the art understands, that the toothed belt can be substituted by a toothed rack or a chain. The person skilled in the art further understands that one toothed belt can also be sufficient.

Figure 2 shows a first embodiment of the inventive apparatus 1 and its control scheme. Schematically shown is the toothed belt 5 and a liquid injection means 9, here a needle head, which is reciprocated between a remote position 12, in which the liquid injection means 9 are not in contact with a food article to be treated, i.e. the liquid injection means are above the food article, and an end position 13 in which the stroke of the liquid injection means is stopped and reversed. The stroke is symbolized by double arrow 14. The person skilled in the art understands, that the inventive apparatus comprises a table, a belt or the like, which transports the food article to be treated towards the inventive apparatus and under the liquid injection means 9 and away from the inventive apparatus after the liquid injection is finalized. This table and/or belt supports the food article during its injection. The end position 13 of the liquid injection means 9 is normally above such a belt and/or table which is not depicted in figure 2. As can be further seen from figure 2, the toothed belt is driven by a motor 6, here an AC motor. This AC motor is connected to an encoder, which determines the speed of rotation of the motor and provides this information to a frequency convertor which compares the actual speed of rotation with the desired speed of rotation and controls the motor accordingly. Furthermore, the inventive apparatus comprises means 10, here a ruler to determine the position and/or the motion of the liquid injection means 9. This information is supplied to a control unit, for example a PLC. The signal of the PLC will be supplied to the frequency converter, which controls the motion of the liquid injection means 9 by controlling the rotation of the motor 6. The remote position 12, the end position 13 and the velocity profile between these two positions can be freely chosen, for example by an operation panel. However, the remote position 12 and/or the end position 13 can also be set automatically, for example by measuring the height of the food article to be treated and then set the remote position 12 just above the maximum height of the individual food article. The position and/or motion information of the liquid injection means 9 can be utilized to control the motion of the liquid injection means and to control the amount of liquid ejected while the liquid injection means 9 moves from its remote position 12 to its end position 13 and back and/or while the liquid injection means is in contact with the food article. Furthermore, the position- and/or motion information of the liquid injection means can be utilized to control a belt which transports the food articles towards the liquid injection means and away. The person skilled in the art understands, that the velocity of the liquid injection means from the remote to the end position can be different from the velocity of the liquid injection means from the end position to the remote position. The person skilled in the art further understands, that the speed of the liquid injection means need not be constant neither during its downward nor during its upward motion of the liquid injection means 9. Furthermore, the amount of fluid ejected during the stroke needs not to be constant but may vary with the distance that the liquid injection means has covered in the food article. In the present case, the inventive apparatus preferably comprises an energy recuperation device, which recuperates the kinetic energy during the deceleration of the liquid injection means 9, for example, prior to reaching the remote and/or end position. This energy can be used to drive a pump which pumps the liquid towards the liquid injection means.

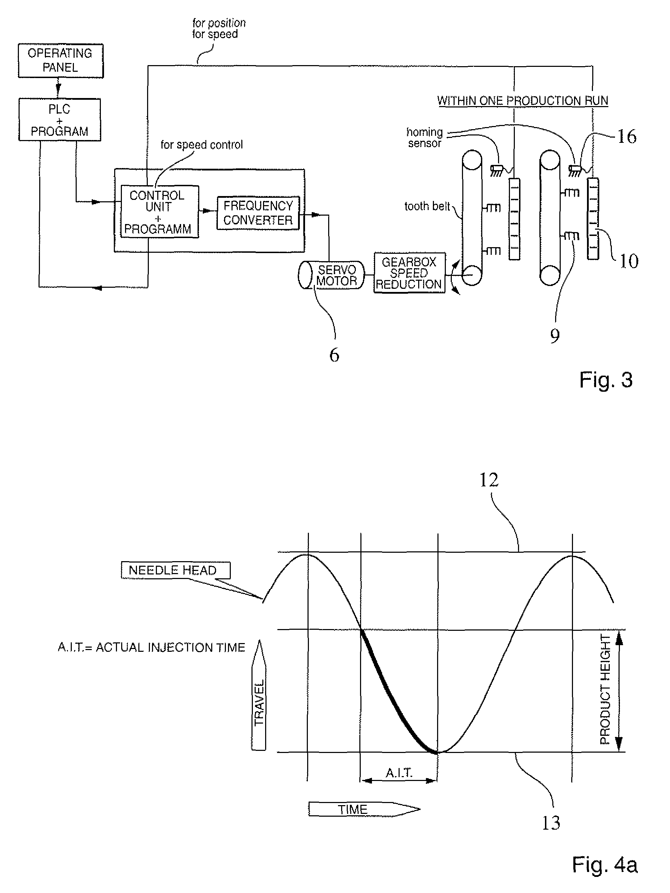

Figure 3 shows another embodiment of the present invention.

In the present case, the motor is a servo-motor and the rulers 10 is utilized to determine the position and the speed of the liquid injection means 9. Furthermore, in the present case, the inventive apparatus comprises a home sensor to determine, when the liquid injection means 9 is in its home position, which is for example its most remote position from a table to support a food article.

Figures 4a - 4e depict the motion of the liquid injection means versus time, which is in the example according to figures 4a - 4e a needle head. However, the person skilled in the art understands that other liquid injection means can be utilized. In the following description for figures 4a - 4e needle head is used as a synonym for liquid injection means. As can be seen from figures 4a - 4e, the motion of the needle head from its remote position 12 to its end position 13 and back versus time is a sinusoidal curve. In each example, the position-and/or motion-information is used to start, stop and/or control the liquid discharge from the needles of the needle-head.

Figure 4a shows a first control scheme of the liquid injection into the food article during this movement. In the embodiment according to figure 4a, liquid is only injected into the food article during the downward movement of the needle head and only after the needles have touched the food product. The height of the food product is indicated on the right hand side, the actual injection time (AIT) is also indicated.

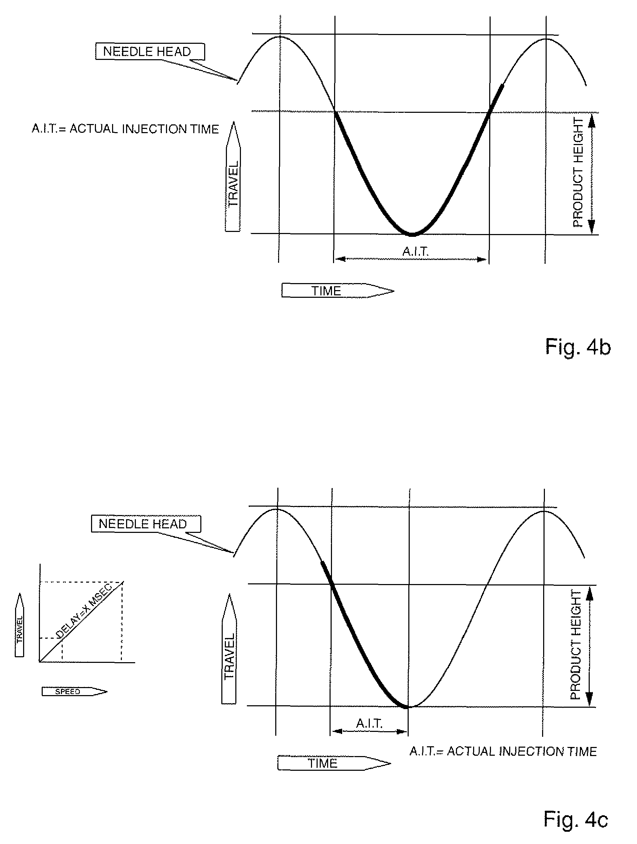

In the embodiment according to figure 4b liquid is not only injected during the movement of the needle head from its remote to its reverse position but also during the backward stroke. However as can also be seen, the liquid supply from the needle is preferably even maintained after the needles have left the product to assure, that liquid is injected into the food article on the entire upward stroke. However, the person skilled in the art understands, that it can also be sufficient to stop the liquid injection as soon as the needles have left the product.

In the embodiment according to figure 4c, reference can be essentially made to the embodiment according to figure 4a however, in the present case the liquid ejection from the needles and/or the activation of the pump is started before the needles actually hit the product. This assures, that liquid is ejected into a product over the entire height and preferably at a constant rate.

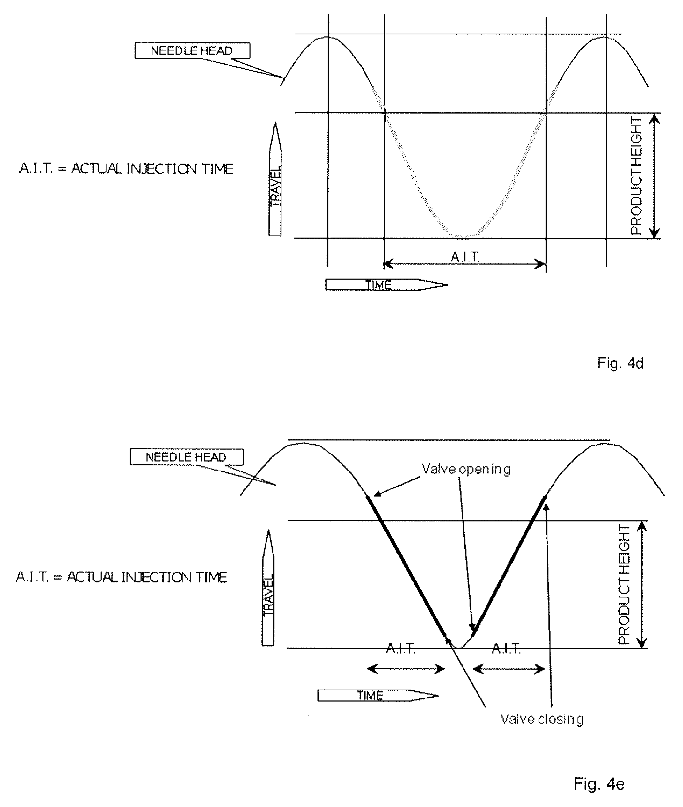

In the embodiment according to figure 4d, the liquid injection is started before the needles hit the product and is maintained during the entire downward and upward stroke of the needles and even maintained after the needles have already left the product.

Figure 4e shows another embodiment of the present invention. In the present case, the liquid ejection is started before the needles hit the product or when the needles hit the product. However, the liquid ejection is stopped before the needles reach their end position and is only started again after the needles have left their end position and maintained until the needles leave the product or even until the needles have already left the product. This application is particularly suitable for avoiding an over-injection in the end position of the needles.

The person skilled in the art understands that the ejection of the liquid from the needles of the liquid injection means can be started, stopped and/or controlled by moving the needles relative to a manifold. This is for example described in EP 1 683 423. Furthermore, the liquid ejection of the liquid injection means can be controlled by controlling the pump and/or one or more valves.

### List of reference signs:

- 1: Injection apparatus
- 2: frame
- 3: sprocket
- 4: axis
- 5: toothed belt
- 6: motor
- 7: connection to liquid injection means, particularly a needle head
- 8: encoder
- 9: liquid injection means, needles
- 10: means to determine the position of the liquid injection means 9, ruler
- 11: gear box
- 12: remote position
- 13: end position
- 14: movement of the liquid injection means
- 15: drive of the liquid injection means
- 16: home sensor

## Claims

1. Injection apparatus (1), to inject a liquid into a food article, particularly meat, comprising liquid injection means (9), which reciprocates between a remote- and a end position, driven by a drive (6), wherein the drive comprises a motor (6) and a toothed belt and/or a toothed rack and/or a chain (5), **characterized in, that** it comprises an energy recuperation device.

2. Injection apparatus (1) according to claim 1, **characterized in, that** the toothed belt, toothed rack and/or the chain moves relative to a frame (2).

3. Injection apparatus (1) according to one of the preceding claims, **characterized in, that** the liquid injection means (9) are connected to the toothed belt, the toothed rack and/or the chain.

4. Injection apparatus (1) according to one of the preceding claims, **characterized in, that** the motor (6) is a servomotor, an AC motor, a DC motor, or a stepper motor.

5. Injection apparatus (1) according to one of the preceding claims, **characterized in, that** it comprises means (10) to determine the position of the liquid injection means (9).

6. Injection apparatus (1) according to claim 1, **characterized in, that** the recuperated energy is used to operate a liquid pump.

7. Process to operate an injection apparatus (1) which comprises a liquid injection means (9), which is reciprocated between a remote position and an end position which is decelerated prior to reaching the remote and/or the end position, **characterized in, that** the kinetic energy during the deceleration is at least partially recuperated, preferably converted into electrical energy.

8. Process according to claim 7, **characterized in, that** a liquid pump is provided and that the recuperated energy is utilized to operate the liquid pump.

9. Process according to claims 7 and 8, **characterized in that** liquid injection means (9) and means to control the liquid injection means are provided, which control the amount of liquid ejected out of the liquid injection means (9), while the liquid injection means (9) are in contact with the food article.

10. Process according to claim 9, **characterized in, that** the ejection of the liquid is reduced, preferably stopped before the means (9) reach their end position.

11. Process according to claims 9 and 10, **characterized in, that** the ejection of the liquid is reduced while the means (9) is in its end position.

12. Process according to one of claims 9 - 11, **characterized in, that** the ejection of the liquid is only activated after the means (9) have already left their end position.

## Patentansprüche

1. Injektionsvorrichtung (1) zum Einspritzen einer Flüssigkeit in ein Nahrungsmittel, insbesondere Fleisch, umfassend ein Flüssigkeitsinjektionsmittel (9), das sich zwischen einer entfernten und einer Endstellung, angetrieben von einem Antrieb (6), hin und her bewegt, wobei der Antrieb einen Motor (6) und einen Zahnriemen und/oder eine Zahnstange und/oder eine Kette (5) umfasst, **dadurch gekennzeichnet, dass** sie eine Energierückgewinnungsvorrichtung umfasst.

2. Injektionsvorrichtung (1) nach Anspruch 1, **dadurch gekennzeichnet, dass** sich der Zahnriemen, die Zahnstange und/oder die Kette bezüglich eines Rahmens (2) bewegt.

3. Injektionsvorrichtung (1) nach einem der vorhergehenden Ansprüche, **dadurch gekennzeichnet, dass** das Flüssigkeitsinjektionsmittel (9) mit dem Zahnriemen, der Zahnstange und/oder der Kette verbunden ist.

4. Injektionsvorrichtung (1) nach einem der vorhergehenden Ansprüche, **dadurch gekennzeichnet, dass** der Motor (6) ein Servomotor, ein Wechselstrommotor, ein Gleichstrommotor oder ein Schrittmotor ist.

5. Injektionsvorrichtung (1) nach einem der vorhergehenden Ansprüche, **dadurch gekennzeichnet, dass** sie Mittel (10) zur Bestimmung der Position des Flüssigkeitsinjektionsmittels (9) umfasst.

6. Injektionsvorrichtung (1) nach Anspruch 1, **dadurch gekennzeichnet, dass** die zurückgewonnene Energie für den Betrieb einer Flüssigkeitspumpe verwendet wird.

7. Verfahren zum Betrieb einer Injektionsvorrichtung (1), die ein Flüssigkeitsinjektionsmittel (9) umfasst, das zwischen einer entfernten Stellung und einer Endstellung hin und her bewegt wird, das vor Erreichen der entfernten und/oder der Endstellung verlangsamt wird, **dadurch gekennzeichnet, dass** die kinetische Energie während der Verlangsamung wenigstens teilweise zurückgewonnen wird, und vorzugsweise in elektrische Energie umgewandelt wird.

8. Verfahren nach Anspruch 7, **dadurch gekennzeichnet, dass** eine Flüssigkeitspumpe bereitgestellt ist und dass die zurückgewonnene Energie für den Betrieb der Flüssigkeitspumpe verwendet wird.

9. Verfahren nach den Ansprüchen 7 und 8, **dadurch gekennzeichnet, dass** ein Flüssigkeitsinjektionsmittel (9) und Mittel zur Steuerung des Flüssigkeitsinjektionsmittels bereitgestellt sind, welche die Flüssigkeitsmenge kontrollieren, die aus dem Flüssigkeitsinjektionsmittel (9) ausgestoßen wird, während das Flüssigkeitsinjektionsmittel (9) mit dem Nahrungsmittel in Kontakt ist.

10. Verfahren nach Anspruch 9, **dadurch gekennzeichnet, dass** der Ausstoß der Flüssigkeit verringert, vorzugsweise gestoppt wird, bevor das Mittel (9) seine Endstellung erreicht.

11. Verfahren nach den Ansprüchen 9 und 10, **dadurch gekennzeichnet, dass** der Ausstoß der Flüssigkeit verringert wird, während sich das Mittel (9) in seiner Endstellung befindet.

12. Verfahren nach einem der Ansprüche 9-11, **dadurch gekennzeichnet, dass** der Ausstoß der Flüssigkeit erst aktiviert wird, nachdem das Mittel (9) seine Endstellung verlassen hat.

## Revendications

1. Appareil d'injection (1) pour injecter un liquide dans un article alimentaire, en particulier de la viande, comprenant des moyens d'injection de liquide (9) qui exécutent un déplacement alternatif entre une position distante et une position d'extrémité, entraînés par une commande (6), dans lequel la commande comprend un moteur (6) et une courroie dentée et/ou une crémaillère et/ou une chaîne (5), **caractérisé en ce qu'**il comprend un dispositif de récupération d'énergie.

2. Appareil d'injection (1) selon la revendication 1, **caractérisé en ce que** la courroie dentée, la crémaillère et/ou la chaîne se déplace(nt) par rapport à un cadre (2).

3. Appareil d'injection (1) selon l'une des revendications précédentes, **caractérisé en ce que** les moyens d'injection de liquide (9) sont connectés à la courroie dentée, à la crémaillère et/ou à la chaîne.

4. Appareil d'injection (1) selon l'une des revendications précédentes, **caractérisé en ce que** le moteur (6) est un servomoteur, un moteur à courant alternatif (AC), un moteur à courtant continu (DC) ou un moteur pas à pas.

5. Appareil d'injection (1) selon l'une des revendications précédentes, **caractérisé en ce qu'**il comprend des moyens (10) pour déterminer la position des moyens d'injection de liquide (9).

6. Appareil d'injection (1) selon la revendication 1, **caractérisé en ce que** l'énergie récupérée est utilisée pour faire fonctionner une pompe hydraulique.

7. Procédé d'utilisation d'un appareil d'injection (1) comprenant des moyens d'injection de liquide (9) qui exécutent un déplacement alternatif entre une position distante et une position d'extrémité, qui sont ralentis avant d'atteindre la position distante et/ou la position d'extrémité, **caractérisé en ce que** l'énergie cinétique générée pendant la décélération est au moins partiellement récupérée, et de préférence convertie en énergie électrique.

8. Procédé selon la revendication 7, **caractérisé en ce qu'**une pompe hydraulique est prévue, et **en ce que** l'énergie récupérée est utilisée pour faire fonctionner la pompe hydraulique.

9. Procédé selon les revendications 7 et 8, **caractérisé en ce que** des moyens d'injection de liquide (9) et des moyens de commande des moyens d'injection de liquide sont prévus, qui commandent la quantité de liquide éjectée hors des moyens d'injection de liquide (9), alors que les moyens d'injection de liquide (9) sont en contact avec l'article alimentaire.

10. Procédé selon la revendication 9, **caractérisé en ce que** l'éjection de liquide est réduite, de préférence arrêtée, avant que les moyens (9) atteignent leur position d'extrémité.

11. Procédé selon les revendications 9 et 10, **caractérisé en ce que** l'éjection du liquide est réduite pendant que les moyens (9) se trouvent dans leur position d'extrémité.

12. Procédé selon l'une des revendications 9 à 11, **caractérisé en ce que** l'éjection du liquide est uniquement activée après que les moyens (9) aient déjà quitté leur position d'extrémité.
